# EUROPEAN PATENT SPECIFICATION

(11) **EP 3 244 233 B1**
(45) Date of publication and mention of the grant of the patent: **23.02.2022**
(21) Application number: 16168848.6
(22) Date of filing: 10.05.2016
(51) Int. Cl.: G01S 17/93, G01S 13/93, G01S 17/89, B62D 15/02, G05D 1/02, G01S 13/89

(54) **APPARATUS AND METHOD FOR AUTOMATED PARKING**
VORRICHTUNG UND VERFAHREN ZUM AUTOMATISCHEN PARKEN
APPAREIL ET PROCÉDÉ DE STATIONNEMENT AUTOMATISÉ

(43) Date of publication of application: 15.11.2017
(73) Proprietor: Continental Automotive GmbH, 30165 Hannover (DE)
(72) Inventor: Guerreiro, Rui, Brighton BN1 5PP (GB); Gao, Lingjun, Uckfield TN22 5BY (GB)
(74) Representative: Continental Corporation

(56) References cited:
- WO-A1-2015/001065
- DE-A1-102004 048 530
- US-A1- 2013 314 503

## Description

The present invention relates to an apparatus and a method for automated parking of a vehicle. In particular, the present invention relates to an automated parking considering long-range estimation of the environment of the vehicle.

### Prior art

US 2013314503 A1 discloses a vehicle vision system with front and rear camera integration. The vision system may provide features such as blind spot detection, a trailer backup function or autonomous parking.

DE 10 2004 048 530 A1 relates to a collision avoidance system for long vehicles that determines available space, required space and calculates a trajectory dependent on driver strategy and driving situation.

WO 2015001065 A1 discloses a trailer parameter identification system for identifying at least one geometrical parameter relating to a trailer.

Modern vehicles usually comprise an advanced driver assistance system (ADAS) for assisting a driver of a vehicle. ADAS functions can be used to assist the driver of the vehicle, while the control for a driving the vehicle still remains at the driver. Further, ADAS functions may be used for a completely automated driving of a vehicle. One of the ADAS functions that is of great interest is an automatic parking of a vehicle. For instance, a small local area surrounding the vehicle may be scanned by radar-like sensors in order to detect obstacles. Based on the detected obstacles, a trajectory can be planned for parking the vehicle.

Conventional ADAS functions for parking a vehicle usually only consider a very small region surrounding the vehicle. Accordingly, an assistance for parking a vehicle is only possible in this small surrounding region.

If the vehicle is very long or a vehicle-trailer-combination shall be parked, the trajectory for parking such a long vehicle or a vehicle-trailer-combination extends the space which can be scanned by the short range sensor of a conventional parking assistance system. Hence, it is not possible to plan an appropriate trajectory for an automatic parking of long vehicles or vehicle-trailer-combinations by means of ADAS functions which are usually employed in standard vehicles.

Hence, there is a need for an enhanced automatic parking of vehicles which is applicable for long vehicles such as a vehicle-trailer-combination. Further, there is a need for an automatic parking system which allows a reliable automatic parking even under complex situations.

### Disclosure of the invention

The present invention provides an apparatus for automatic parking of a vehicle with the features of independent claim 1. Further, the present invention provides a method for automatic parking of a vehicle according to the features of independent claim 8.

### Advantages of the invention

One idea underlying the present invention is to take into account an enhanced range for scanning the surrounding of the vehicle when planning an automatic parking of the vehicle. It is for this purpose that the scanning of the surrounding of the vehicle is performed by means of long-range sensors. Such long-range sensors may be, for instance, a scanning system employing structure from motion technique or another optical analysis, or a long range-radar which is usually only activated when the vehicle is driving at higher speed In this way, a larger surrounding area can be taken into account when planning the automatic parking of a vehicle. Consequently, obstacles can be identified in this larger area surrounding the vehicle. By considering obstacles in such a larger area surrounding the vehicle, it is possible to plan an appropriate trajectory for navigating even a long vehicle or a vehicle-trailer-combination to a desired parking position. Hence, a collision with an obstacle which cannot be identified by a near-field scanning system can be avoided. Consequently, the security for an automatic parking can be enhanced.

Further, by taking into account a larger surrounding of a vehicle when planning an automatic parking process, it is possible to identify parking positions having a larger distance to the vehicle. Accordingly, an identification of an appropriate parking position can be increased. Based on the long-range-sensing unit which is used for the scanning of the surrounding, it is even possible to detect an appropriate parking position which may be located behind an obstacle. In particular, even larger parking space can be identified, which is required for longer vehicles and vehicle-trailer-combinations.

According to a further embodiment, the long-range sensing unit of the apparatus for automatic parking is adapted to perform an optical scanning of the environment while the vehicle is moving. In particular, the long-range sensing unit is adapted to scan the surrounding by applying a structure from motion (SFM) technique. This technique consists of tracking three-dimensional points in a scene while the vehicle moves. In particular, it is assumed that the appearance of two-dimensional images is approximately constant apart from potential perspective changes. By assuming that these two-dimensional points are static in a three-dimensional environment, and the movement of these points is caused only by a change of the relative position with regard to the vehicle, it is possible to perform a triangulation in order to determine the three-dimensional location of the points in the environment. Accordingly, such an optical approach for scanning the surrounding of the vehicle provides an efficient scanning of a long-range in the surrounding.

According to a further aspect, the present invention provides a vehicle comprising an apparatus for automatic parking according to the present invention.

In a further embodiment, the vehicle comprises a vehicle-trailer-combination. The navigation of a vehicle-trailer-combination requires a larger space for navigating the vehicle-trailer-combination to a desired parking position. By scanning obstacles in a larger surrounding of the vehicle, it is even possible to determine an appropriate trajectory for navigating such a vehicle-trailer-combination without a collision with any obstacles in the required trajectory.

According to a further embodiment, the vehicle further comprises a detecting unit. A detecting unit is adapted to detect a configuration of the vehicle-trailer-combination. By detecting the configuration of the vehicle-trailer-combination, the size and consequently the required space for navigating such a vehicle-trailer-combination, can be considered appropriately.

According to a further embodiment, the vehicle comprises a controlling unit which is adapted to control the movement of the vehicle according to the computed trajectory to the selected parking position. In this way, a completely automated parking of the vehicle can be achieved.

According to a further embodiment, the estimation of the three-dimensional scene comprises identifying obstacles within a predetermined range.

According to a further embodiment, the estimation of the three-dimensional scene comprises classifying a ground. Further, the method may comprise a step for selecting the parking position based on the classification of the ground. By classifying the ground, a user may be further assisted for identifying an appropriate parking position. Alternatively, a completely automatic selection of an appropriate parking position can be achieved based on this automatic classification of a ground.

According to a further embodiment, the method comprises a step for automatic navigating a vehicle to the parking position based on the computed trajectory.

Further advantages and embodiments will become apparent based on the following description in combination with the accompanying drawings, wherein:
- Figure 1: illustrates a schematic drawing of a traffic situation for an automatic parking of a vehicle according to an embodiment;
- Figure 2: shows a schematic illustration of an apparatus for automatic parking of a vehicle;
- Figure 3: shows a schematic illustration relating to a structure from motion technique which may be applied in an embodiment; and
- Figure 4: shows a schematic drawing of a flowchart underlying a method for automatic parking according to an embodiment.

### Description of embodiments

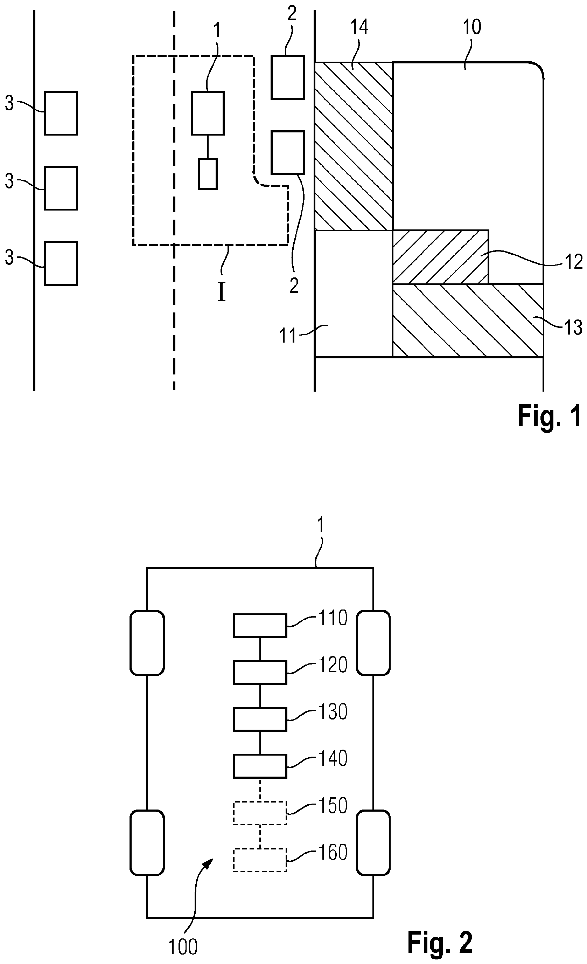

Figure 1 shows a schematic illustration of a traffic situation for parking a vehicle 1. As can be seen in this figure, there are some further parking vehicles 2, 3 on the left and the right border. These further vehicles 2, 3 represent obstacles. However, further obstacles, in particular other obstacles than vehicles 2, 3 may be possible, too. On the right part of Figure 2 there is illustrated a suburban house 10 with a driveway 11 leading to a garage 12 and a corridor 13 next to the garage 12. Further, there may be a front garden 14 in front of the house 10.

When using a parking assistant system of a standard vehicle, the standard vehicle may use a short range scanning system such as a short radar for scanning obstacles in a closer surrounding of vehicle 1. For instance, a standard vehicle may scan an area which is surrounded by dashed line I of Figure 1. Such a short range scanning system of a standard vehicle will not recognize the obstacles such as vehicles 2 on the left side. Further, a standard vehicle will not be in the position to scan the area of house 12 with its driveway 11, garage 12, corridor 13 and front garden 14. Consequently, a parking system of a standard ADAS will not recognize the parking positions on the driveway 11, the garage 12 and the corridor 13.

Further to this, even if a driver would manually identify a desired parking position at the driveway 11, the garage 12 or the corridor 13, a parking system of a standard vehicle will not consider the vehicles 3 on the left when planning a trajectory to such a parking position. Consequently, if vehicle 1 is a long vehicle or vehicle-trailer-combination, the standard vehicle may plan a trajectory, which crosses obstacles outside an area scanned by a near-field scanning system. Consequently, the vehicle 1 may crash into such an obstacle when navigating the vehicle 1 to a parking position.

In order to deal with the above-identified problems, the area surrounding vehicle 1 is scanned with a long-range scanning unit. Such a long-range scanning unit can be any kind of long range scanning system. For example, the long range scanning unit can be an optical system, in particular an optical system applying a structure from motion technique. Additionally or alternatively, a long range scanning can be performed by means of a long-range radar. Long-range radar system usually are only activated when the vehicle is driving with a higher speed. If the vehicle is driving slow, for instance when looking for an appropriate parking position, the long-range radar systems of a vehicle usually are deactivated.

Figure 2 shows a schematic illustration of an apparatus for automated parking of a vehicle. The apparatus 100 comprises a long-range sensing unit 110, a processing unit 120, a selection unit 130 and a trajectory computing unit 140. Further, the apparatus 100 may comprise a detection unit 150 and/or a controlling unit 160. The long-range sensing unit 110 scans a surrounding of the vehicle within a predetermined range. The scanning area of such a long-range sensing unit is significant larger than a scanning area of a near-field radar, for instance a near-field radar which is used in a parking assistance system of a standard vehicle. In particular, the long-range sensing unit may scan a surrounding of the vehicle in a distance of at least 5 m surrounding the vehicle. Scanning systems scanning an area larger than 5 m, for instance an area of at least 10 m, 20 m or 50 m surrounding the vehicle or even larger areas may be possible, too. For instance, the long-range sensing unit 110 may comprise a long-range radar. Such long-range radars may be used, for instance, in advanced driver assistance systems for controlling a vehicle when driving the vehicle with a high speed. Further to this, additional long-range radar systems for scanning the left and/or the right side of the vehicle may be additionally used. However, any further techniques for scanning a long-range surrounding the vehicle may be possible, too. For instance, the surrounding of the vehicle may be also scanned by means of an optical system. In particular, a structure from motion technique may be used for identifying obstacles in the surrounding of the vehicle. This structure from motion technique will be explained in more detail later.

After the surrounding of the vehicle has been scanned by a long-range sensing unit 110, the sensing data of this long-range sensing unit 110 are forwarded to processing unit 120.

Processing unit 120 generates an estimation of a scene, in particular of a three-dimensional scene based on the sensing data provided by long-range sensing unit 110. Processing unit 120 may identify obstacles in the scanned surrounding of the vehicle. Processing unit 120 may also classify the identified obstacles. For instance, a size, a diameter, a height or any other features of identified obstacles may be determined. Further to this, it may be also possible to classify a ground of the scanned surrounding of the vehicle. For instance, it can be determined, whether the ground in the surrounding of the vehicle is a road, a sidewalk, a grass area, a driveway or any other kind of a ground. In particular, it may be possible to determine whether or not the ground in the surrounding is appropriate for parking the vehicle 1.

After the three-dimensional scene has been generated based on the data of long-range sensing unit 110, an appropriate parking position may be identified. The identification of the parking position may be selected either by a driver of the vehicle 1 or alternatively the parking position may be selected automatically. For instance, a representation of the generated three-dimensional scene may be provided to a driver. For this purpose, the representation of the three-dimensional scene may be displayed on a display of a selection unit 130. For example, different types of ground in the scanned surrounding of the vehicle may be displayed with different colors. In this way, a user may identify an appropriate parking position in a very easy way. Based on a three-dimensional scene, which has been generated by processing unit 120, it is even possible to identify buildings, such as a garage, in which the vehicle can be parked. Accordingly, such positions may be also provided to the driver as an appropriate parking position. For instance, a driver may select one of the possible parking positions by selecting the respective area on a scene. For instance, the driver may press a touch-screen on the corresponding position of a display. However, any other possibility for selecting a parking position by a driver may be possible, too.

Alternatively, selecting unit 130 may select an appropriate parking position in an automatic way. For example, the selecting unit 130 may automatically select an area having an appropriate ground and an appropriate size for parking the vehicle. Any algorithm for selecting an appropriate parking position, in particular for priorizing the parking position out of a plurality of possible parking positions can be applied when automatically selecting the parking position.

After the parking position has been selected either manually by a driver or automatically, trajectory computing unit 140 computes a trajectory for navigating the vehicle to the selected parking position. For this purpose, trajectory computing unit 140 may consider all obstacles which have been identified in the surrounding of the vehicle. In particular, the trajectory for navigating the vehicle to the selected parking position can be computed based on the three-dimensional scene which has been generated by processing unit 120. Since the computing of the trajectory for navigating the vehicle to the selected parking position can be computed by considering obstacles in a large surrounding of the vehicle, it is possible to determine a trajectory for navigating the vehicle without crashing into an obstacle, even if larger space is needed for navigating the vehicle. In particular, in this way it is even possible to navigate long vehicles and vehicle-trailer-combinations into a desired parking position without crashing into an obstacle.

For instance, if a trajectory computing unit 140 determines that it will be not possible to navigate the vehicle 1 to the selected parking position by simply driving backwards the vehicle 1, trajectory computing unit 140 may compute a trajectory by driving the vehicle 1 forward in a first step. When the vehicle 1 is driving forward in a first step, it may be also possible to navigate the vehicle 1 sideward, or move the vehicle 1 in any appropriate direction. Subsequently, in a second step, the vehicle 1 may be navigated to the desired parking position by driving backwards the vehicle 1. In particular, the steering of the front roads of vehicle 1 may be computed in a manner which is appropriate for navigating a long vehicle or a vehicle-trailer-combination to the desired parking position.

In order to determine the configuration of the vehicle comprising an apparatus for automated parking, the vehicle 1 may further comprise a detecting unit 150. This detecting unit 150 may be adapted to detect the configuration of the vehicle 1. In particular, detecting unit 150 may detect whether or not a trailer is attached to the vehicle. In case a trailer is attached to the vehicle, detecting unit 150 may detect the features of the attached trailer. For instance, detecting unit 150 may detect the size of the trailer. Further, detecting unit 150 may detect the number of wheels/axis of the attached trailer. Any further features may be detected by detecting unit 150, too.

Further, a vehicle 1 with an apparatus 100 for automated parking may comprise a controlling unit 160 which is adapted to control the movement of the vehicle 1 according to the trajectory which is computed by trajectory computing unit 140. In this way, a complete automated navigation of the vehicle 1 into a parking position can be achieved.

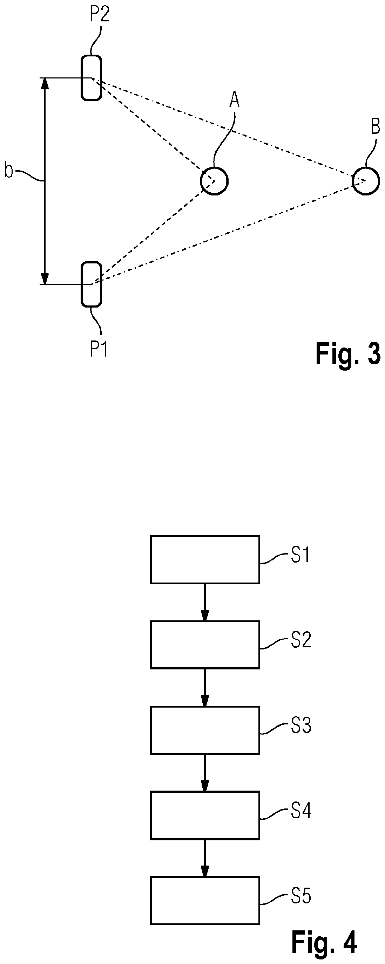

As already described, the long-range scanning of the surrounding of the vehicle can be performed by means of a long-range radar or a structure from motion technique. Figure 3 illustrates a schematic drawing for describing the structure from motion technique. Vehicle 1 may comprise at least one camera for capturing images in the surrounding of the vehicle 1. For instance, such a camera may capture side view images. However, any kind of camera looking to the side, to the front or the rear of a vehicle may be appropriate. For determining a position of a point in the surrounding of vehicle 1, at least two images at different positions of vehicle 1 are captured. For instance, a first image of the surrounding may be captured at a first position P1. After the vehicle 1 has moved a well-known distance, a further image is captured at a second position P2. Additionally, it may be also possible to capture additional images at further positions. The distance b between the two positions P1 and P2 at which the images are captured, may be denoted as "baseline". Accordingly, the idea underlying the structure from motion technique consists of tracking three-dimensional points in a scene, while the vehicle moves. Further, it is assumed that the appearance of the two-dimensional images is approximately constant, apart from potential perspective changes. By assuming that the points in the surrounding are static, and the movement of the image data is only due to the relative position with regard to the vehicle, a triangulation can be used to determine the three-dimensional location of points in the scene. As can be seen, for instance in Figure 3, a point A close to the vehicle 1 changes with an angle different from a point B which is far away from the vehicle. Hence, based on a known baseline b, the distance of points A and B can be determined. In particular, the accuracy for determining the position of points A and B increases, if the baseline, i.e. the distance between position P1 and P2 increases.

In this way, by applying a structure from motion technique and/or a long-range radar, a large area surrounding the vehicle can be scanned in order to identify obstacles and/or an appropriate parking position. Accordingly, an appropriate trajectory for navigating a long vehicle and/or a vehicle-trailer-combination can be determined, although such a trajectory requires larger space surrounding the vehicle for navigating the vehicle to the desired parking position.

Further to this, the scanning area surrounding the vehicle 1 can be further increased by positioning the long-range scanning systems at an appropriate position on the vehicle 1. For instance, if the long-range scanning unit 110 is located at a very low position of the vehicle, it may be possible to look under beneath some obstacles in the environment of the vehicle 1. Accordingly, appropriate parking positions behind such obstacles can be determined. Additionally or alternatively, it may be also possible to locate a long-range scanning unit 110 on top of a vehicle in order to look above obstacles in the surrounding of the vehicle.

Figure 4 shows a schematic illustration of a flowchart underlying a method for an automatic parking of a vehicle. In a first step S1, a long-range scanning of the surrounding of the vehicle is performed. The long-range scanning is performed within a predetermined range. For instance, the predetermined range is at least 10 m or at least 20 m or larger (50 m or more) surrounding the vehicle. In step S2, sensing data relating to the scanned surrounding of the vehicle are provided and in step S3 a three-dimensional scene is estimated based on the provided sensing data. In step S4, a parking position of the vehicle is selected. The selection of the parking position can be performed based on the estimated three-dimensional scene. For instance, a driver may manually select a parking position out of a plurality of provided possibilities for an appropriate parking position. Alternatively, a completely automated selection of an appropriate parking position can be performed. In step S5, a trajectory for navigating the vehicle to the selected parking position is computed. In particular, the computation of the trajectory is performed by considering the estimated three-dimensional scene.

Summarizing, the present invention provides an enhanced automatic parking of a vehicle. In particular, a long-range scanning in the surrounding of a vehicle is performed in an extended range. The long-range scanning can be performed by means of a long-range radar and/or a structure from motion technique. In this way, it is possible to consider an extended space surrounding the vehicle for navigating the vehicle. Accordingly, a trajectory for navigating long vehicles and vehicle-trailer-combinations backwards can be computed by considering an extended surrounding of the vehicles. Hence, collisions with obstacles in the surrounding of the vehicle can be avoided for such long vehicles.

## Claims

1. An apparatus (100) for automated parking a vehicle, comprising:
a long-range sensing unit (110), adapted to scan a surrounding of the vehicle within a predetermined range and to provide sensing data relating to the scanned surrounding;
wherein the long-range sensing unit (110) comprises a long-range radar, and wherein the long-range sensing unit (110) is adapted to scan an area in a surrounding of the vehicle in a distance of at least 5 meters surrounding the vehicle;
a processing unit (120), adapted to generate an estimation of a three-dimensional scene based on the sensing data provided by the long-range sensing unit (110);
a selection unit (130), adapted to select a parking position for the vehicle; and
a trajectory computing unit (140), adapted to compute a trajectory for navigating the vehicle to the selected parking position based on the three-dimensional scene which has been generated by the processing unit (120).

2. The apparatus according to claim 1, wherein the long-range sensing unit (110) is adapted to perform an optical scanning of the surrounding while the vehicle is moving.

3. The apparatus according to claim 1 or 2, wherein the long-range sensing unit (110) is adapted to scan the surrounding applying a structure from motion technique.

4. A vehicle, comprising the apparatus for automated parking according to claims 1 to 3.

5. The vehicle according to claim 4, wherein the vehicle comprises a vehicle-trailer-combination.

6. The vehicle according to claim 5, further comprising a detection unit (150), adapted to detect a configuration of the vehicle-trailer-combination.

7. The vehicle according to any of claims 4 to 6, further comprising a controlling unit (160), adapted to control the movement the vehicle according to the computed trajectory to the selected parking position.

8. A method for automated parking a vehicle, comprising the steps performed by an apparatus:
performing (S1) a long-range scanning a surrounding of the vehicle within a predetermined range;
providing (S2) sensing data relating to the scanned surrounding;
estimating (S3) a three-dimensional scene based on the sensing data;
selecting (S4) a parking position for the vehicle in the estimated three-dimensional scene; and
computing (S5) a trajectory for navigating the vehicle to the selected parking position based on the estimated three-dimensional scene,
wherein the long-range scanning the surrounding comprises a long-range radar scanning technique, and wherein the long-range scanning is scanning an area in a surrounding of the vehicle in a distance of at least 5 meters surrounding the vehicle.

9. The method according to claim 8, wherein estimating (S3) the three-dimensional scene comprises identifying obstacles within a predetermined range.

10. The method according to claim 8 or 9, wherein estimating (S3) the three-dimensional scene comprises classifying a ground, and wherein the selecting the parking position is performed based on the classification of the ground.

## Patentansprüche

1. Vorrichtung (100) zum automatischen Einparken eines Fahrzeugs, umfassend:
eine Fernabtasteinheit (110), die dazu eingerichtet ist, die Umgebung des Fahrzeugs innerhalb eines vorbestimmten Bereichs abzutasten und Abtastdaten in Bezug auf die abgetastete Umgebung bereitzustellen;
wobei die Fernabtasteinheit (110) ein Fernradar umfasst und wobei die Fernabtasteinheit (110) dazu eingerichtet ist, einen Bereich in einer Umgebung des Fahrzeugs in einem Abstand von mindestens 5 Metern um das Fahrzeug herum abzutasten;
eine Verarbeitungseinheit (120), die dazu eingerichtet ist, eine Schätzung einer dreidimensionalen Szene auf der Grundlage der von der Fernabtasteinheit (110) bereitgestellten Abtastdaten zu erzeugen;
eine Auswahleinheit (130), die dazu eingerichtet ist, eine Parkposition für das Fahrzeug auszuwählen; und
eine Trajektorienberechnungseinheit (140), die dazu eingerichtet ist, eine Trajektorie zum Navigieren des Fahrzeugs zur ausgewählten Parkposition auf der Grundlage der dreidimensionalen Szene, die von der Verarbeitungseinheit (120) erzeugt wurde, zu berechnen.

2. Vorrichtung nach Anspruch 1, wobei die Fernabtasteinheit (110) dazu eingerichtet ist, eine optische Abtastung der Umgebung durchzuführen, während sich das Fahrzeug bewegt.

3. Vorrichtung nach Anspruch 1 oder 2, wobei die Fernabtasteinheit (110) dazu eingerichtet ist, die Umgebung unter Anwendung einer Struktur aus der Bewegungserfassungstechnik abzutasten.

4. Fahrzeug, umfassend die Vorrichtung zum automatischen Einparken nach einem der Ansprüche 1 bis 3.

5. Fahrzeug nach Anspruch 4, wobei das Fahrzeug eine Fahrzeug-Anhänger-Kombination umfasst.

6. Fahrzeug nach Anspruch 5, ferner umfassend eine Erkennungseinheit (150), die zum Erkennen einer Auslegung der Fahrzeug-Anhänger-Kombination eingerichtet ist.

7. Fahrzeug nach einem der Ansprüche 4 bis 6, ferner umfassend eine Steuereinheit (160), die dazu eingerichtet ist, die Bewegung des Fahrzeugs gemäß der berechneten Trajektorie zur ausgewählten Parkposition zu steuern.

8. Verfahren zum automatischen Einparken eines Fahrzeugs, umfassend die folgenden Schritte, die von einer Vorrichtung durchgeführt werden:
Durchführen (S1) einer Fernabtastung der Umgebung des Fahrzeugs innerhalb eines vorbestimmten Bereichs;
Bereitstellen (S2) von Abtastdaten, die sich auf die abgetastete Umgebung beziehen;
Schätzen (S3) einer dreidimensionalen Szene auf der Grundlage der Abtastdaten;
Auswählen (S4) einer Parkposition für das Fahrzeug in der geschätzten dreidimensionalen Szene; und
Berechnen (S5) einer Trajektorie zum Navigieren des Fahrzeugs zur ausgewählten Parkposition auf der Grundlage der geschätzten dreidimensionalen Szene,
wobei das Fernabtasten der Umgebung eine Fernradarabtasttechnik umfasst und wobei das Fernabtasten einen Bereich in einer Umgebung des Fahrzeugs in einem Abstand von mindestens 5 Metern um das Fahrzeug herum abtastet.

9. Verfahren nach Anspruch 8, wobei das Schätzen (S3) der dreidimensionalen Szene das Identifizieren von Hindernissen innerhalb eines vorbestimmten Bereichs umfasst.

10. Verfahren nach Anspruch 8 oder 9, wobei das Schätzen (S3) der dreidimensionalen Szene das Klassifizieren eines Bodens umfasst und wobei das Auswählen der Parkposition auf der Grundlage der Klassifizierung des Bodens durchgeführt wird.

## Revendications

1. Appareil (100) de stationnement automatisé d'un véhicule, comportant :
une unité (110) de détection à longue portée, prévue pour balayer des environs du véhicule à l'intérieur d'une plage prédéterminée et pour fournir des données de détection se rapportant aux environs balayés ;
l'unité (110) de détection à longue portée comportant un radar à longue portée, et l'unité (110) de détection à longue portée étant prévue pour balayer une zone dans des environs du véhicule à une distance d'au moins 5 mètres autour du véhicule ;
une unité (120) de traitement, prévue pour générer une estimation d'une scène tridimensionnelle d'après les données de détection fournies par l'unité (110) de détection à longue portée ;
une unité (130) de sélection, prévue pour sélectionner une position de stationnement pour le véhicule ; et
une unité (140) de calcul de trajectoire, prévue pour calculer une trajectoire servant à faire naviguer le véhicule jusqu'à la position de stationnement sélectionnée d'après la scène tridimensionnelle qui a été générée par l'unité (120) de traitement.

2. Appareil selon la revendication 1, l'unité (110) de détection à longue portée étant prévue pour effectuer un balayage optique des environs tandis que le véhicule se déplace.

3. Appareil selon les revendications 1 ou 2, l'unité (110) de détection à longue portée étant prévue pour balayer les environs en appliquant une technique de structure issue du mouvement.

4. Véhicule comportant l'appareil de stationnement automatisé selon les revendications 1 à 3.

5. Véhicule selon la revendication 4, le véhicule comportant une combinaison véhicule-remorque.

6. Véhicule selon la revendication 5, comportant en outre une unité (150) de détection, prévue pour détecter une configuration de la combinaison véhicule-remorque.

7. Véhicule selon l'une quelconque des revendications 4 à 6, comportant en outre une unité (160) de commande, prévue pour commander le mouvement du véhicule selon la trajectoire calculée jusqu'à la position de stationnement sélectionnée.

8. Procédé de stationnement automatisé d'un véhicule, comportant les étapes, effectuées par un appareil, consistant à :
effectuer (S1) un balayage à longue portée des environs du véhicule à l'intérieur d'une plage prédéterminée ;
fournir (S2) des données de détection se rapportant aux environs balayés ;
estimer (S3) une scène tridimensionnelle d'après les données de détection ;
sélectionner (S4) une position de stationnement pour le véhicule dans la scène tridimensionnelle estimée ; et
calculer (S5) une trajectoire servant à faire naviguer le véhicule jusqu'à la position de stationnement sélectionnée d'après la scène tridimensionnelle estimée,
le balayage à longue portée des environs comportant une technique de balayage radar à longue portée, et le balayage à longue portée consistant à balayer une zone dans des environs du véhicule à une distance d'au moins 5 mètres autour du véhicule.

9. Procédé selon la revendication 8, l'estimation (S3) de la scène tridimensionnelle comportant l'identification d'obstacles à l'intérieur d'une plage prédéterminée.

10. Procédé selon les revendications 8 ou 9, l'estimation (S3) de la scène tridimensionnelle comportant la classification d'un sol, et la sélection de la position de stationnement étant effectuée d'après la classification du sol.
